(19) Europäisches Patentamt / European Patent Office / Office européen des brevets

(11) **EP 3 399 277 A1**

(12) **EUROPEAN PATENT APPLICATION**

(43) Date of publication:
07.11.2018 Bulletin 2018/45

(21) Application number: 17305501.3

(22) Date of filing: 04.05.2017

(51) Int Cl.:
*G01C 21/00* (2006.01)　　　　*G01C 21/20* (2006.01)
*H04W 4/04* (2009.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: SmarDTV S.A.
1033 Cheseaux-sur-Lausanne (CH)

(72) Inventors:
• SOULIER, Julien
1033 Cheseaux-sur-Lausanne (CH)
• DEPREZ, Olivier
1033 Cheseaux-sur-Lausanne (CH)

(74) Representative: Korenberg, Alexander Tal
Kilburn & Strode LLP
Lacon London
84 Theobalds Road
London WC1X 8NL (GB)

(54) **DEVICE LOCATION DETERMINATION**

(57)　In overview, a system and method for determining the location of a device are disclosed. Typically, the device is generally static such that its location does not vary significantly over time, for example, a television appliance, games console or desktop computer. The location is determined by comparing data from an air pressure sensor with a pressure signature associated with an expected location.

FIG. 5

**Description**

FIELD

The present disclosure relates to determining the location of a device. More particularly, but not exclusively, the present disclosure relates to a system and method for determining a location of a device such as a television appliance.

BACKGROUND

Television appliances such as set-top boxes are used to receive broadcast media content from content providers. Typically, content providers provide media content for different geographic regions based on media content that is relevant to the region, for example local news channels. Further, conditional access systems for television appliances may wish to verify the location of the television appliance as a condition to access broadcast media content.

A Global Positioning System, GPS, receiver in the television appliance may be used to determine the location of the television appliance. The determined location can then be compared with an expected location in order to verify the location of the television appliance. However, television appliances are generally used indoors where GPS receivers are unable to receive GPS signals and so the location of the television appliance may not be accurately determined.

An electromagnetic detector in the television appliance may be used to determine the electromagnetic of the Earth field in the region of the television appliance. The determined electromagnetic field can then be compared with the electromagnetic field at an expected location in order to verify the location of the television appliance. However, locations determined using electromagnetic detection are not precise.

Some television appliances are connected to the internet. For internet-connected television appliances, the Internet Protocol, IP, address of the television appliance can be used to determine the location of the television appliance with reference to a lookup table. However, not all television appliance are connected to the internet and therefore, do not have an IP address. Further, an IP address can be spoofed or obscured, for example, by using a Virtual Private Network, VPN. Accordingly, the IP address of an internet-connected television appliance cannot reliably be used to verify the location of the television appliance.

BRIEF DESCRIPTION OF THE DRAWINGS

Exemplary embodiments of the disclosure shall now be described with reference to the drawings in which:

Figure 1 illustrates an environment in which location determination of location of a television appliance is taking place at the television application;
Figure 2 illustrates the television appliance of Figure 1;
Figure 3 illustrates an environment in which location determination of location of a media consumption device is taking place at the media consumption device;
Figure 4 illustrates the media consumption device of Figure 3;
Figure 5 illustrates a flow chart of a method of location determination of location of a device at the device;
Figure 6 illustrates a further environment in which location determination of location of a media consumption device is taking place using a remote system for determining the location of the media consumption device;
Figure 7 illustrates the media consumption device of Figure 6;
Figure 8 illustrates the remote system of Figure 6 for determining the location of the media consumption device;
Figure 9 illustrates a flow chart of a further method of location determination of a device at the remote system;
Figure 10 illustrates a database comprising expected pressure signatures;
Figures 11A and 11B illustrate example atmospheric pressure data; and
Figure 12 illustrates a block diagram of one implementation of a computing device.

DETAILED DESCRIPTION OF THE DRAWINGS

In overview, a system and method for determining the location of a device are disclosed. Typically, the device is generally static such that its location does not vary significantly over time, for example, a television appliance, games console or desktop computer. The location is determined by comparing data from an air pressure sensor with a pressure signature associated with an expected location.

In some aspects of the disclosure a method comprises obtaining atmospheric pressure data generated at the device. The atmospheric pressure data is derived from air pressure at the device, i.e. in the local vicinity where the device is located. For example, when the generated atmospheric pressure data is derived from of the air pressure at the device, it may be a measurement of air pressure in units of hectopascals, millibars, atmospheres, centimetres of water, millimetres of mercury or inches of mercury. Alternatively, when the generated atmospheric pressure data is derived from the air pressure at the device it may be indicative of, for example, a difference between or sum of two measurements of air pressure taken at different times, or a change in air pressure over time.

Advantageously, a change in air pressure over time may be measured by a derivative of the air pressure with respect to time, i.e. $\frac{dP}{dt}$, where $P$ is air pressure and $t$ is time. A benefit of using the derivative of the air pressure with respect to time is that the derivative provides the relative change in air pressure over time, meaning that calibration errors in the air pressure sensor have negligible effect on the accuracy of the comparison and/or determination steps of the method. It will be appreciated that data indicative of $\frac{dP}{dt}$ may be derived using any suitable numeric method, for example discrete differentiation, and may be calculated as a difference between pressure measurements at given time points, without scaling with respect to the time period between the time points.

The method comprises comparing the atmospheric pressure data and an expected pressure signature associated with an expected location. The expected location may be for example, based on a known location to which the device was supplied, or the expected location may be a location where the device has previously been determined to be located. The expected location may be a location indicated by a user input during a set-up or subscription procedure executed on the device. The method comprises determining that the location of the device is the expected location if the atmospheric pressure data is consistent with the expected pressure signature.

Advantageously, the method may comprise causing a function of the device to be altered if the atmospheric pressure data is not consistent with the expected pressure signature. For example, causing the function of the device to be altered may comprise disabling the function of the device or disabling the whole device from operating. In this way, the functionality of the device can be reduced if the device is not at an expected location.

The method may be performed at the device itself. In embodiments in which the method is performed at the device, the method may comprise receiving the expected pressure signature in a signal, and extracting the expected pressure signature from the signal. The expected pressure signature may be embedded in the signal in the form of, for example, an entitlement management message, EMM, for example using an integrated receiver/decoder, IRD, channel, or a data carousel. A benefit of performing the method at the device itself is that the device does not require two-way data communication, for example an internet connection. However, it will be appreciated that the device may nevertheless be performed at the device in case of connected devices, for example devices receiving content via the internet.

Alternatively, the device may send its atmospheric pressure data to a remote system such that the remote system can perform the method. In embodiments in which the method is performed at the remote system, obtaining the atmospheric pressure data may comprise receiving data over a communication network, such as the internet. The pressure data may be indicative of a new pressure measurement or of a derived quantity, as described above.

The device may be any device capable of consuming media content, for example a television, a set-top box, a computer, a games console, a tablet computer or any other media consumption device. The device may receive content by broadcast or on demand, for example over an internet connection or using a broadcast receiver, irrespective of whether the device also has an internet connection for transmitting data to a system for location determination.

In some aspects of the disclosure, a television appliance comprises a broadcast receiver arranged to receive broadcast media content, and an air pressure sensor. For example, the broadcast receiver may be a cable receiver, a satellite receiver and/or a terrestrial over-the-air receiver. The television appliance may be configured to carry out or participate in a method as described above and implement a method at the television appliance as the device or it may be configured to send air pressure data to a remote system for processing, as described above.

Further aspects of the disclosure relate to a computer program product comprising instructions which, when the program is executed by a computer, cause the computer to carry out the method, a system comprising a processor arranged to carry out the method, and a non-transitory computer readable medium having computer-executable instructions that, when executed on a computer system, implement the method.

The term "consistent with" is to be understood to mean that the atmospheric pressure data substantially matches or corresponds with the expected pressure signature. For example, the values of atmospheric pressure data may be within a predetermined threshold difference from the expected pressure signature, or a trend in the atmospheric pressure data may be substantially the same as a trend in the expected pressure signature. Consistency may be determined by other suitable measures, for example a correlation between the data and the signature exceeding a threshold. In some embodiments, pattern matching algorithms may be used in order to determine that the atmospheric pressure data is consistent with the expected pressure signature.

Generally, it will be understood that data indicative of a quantity may be one or more of data with a numerical value corresponding to a measurement of the quantity, a scaled version of such a numerical value, proportional to such a numerical value or more generally data from which an inference as to a value or change of value of the quantity could be made.

Some specific embodiments are now described by way of illustration with reference to the accompanying drawings in which like reference numerals refer to like features.

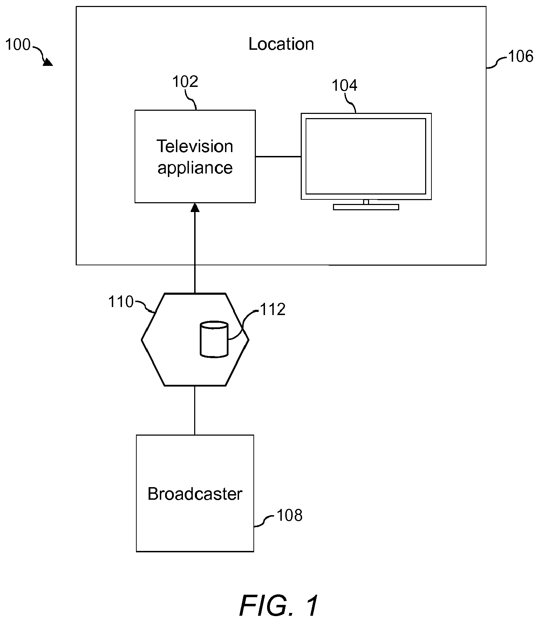

In some embodiments, now described with reference to Figures 1 to 5, location determination is performed at the device.

With reference to Figure 1, a television appliance 102 is connected to a television 104. In some embodiments, the television appliance 102 may be integrated with the television 104, for example in the case of a smart television. The television appliance 102 and the television 104 are both located at a location 106. A broadcaster 108 broadcasts signals to the television appliance 102. The signals comprise data 110. The data comprises an expected pressure signature 112 associated with an expected location. The broadcast signals may comprise media content for output to the television appliance 102. The television appliance 102 is arranged to determine its location based on the expected pressure signature 112.

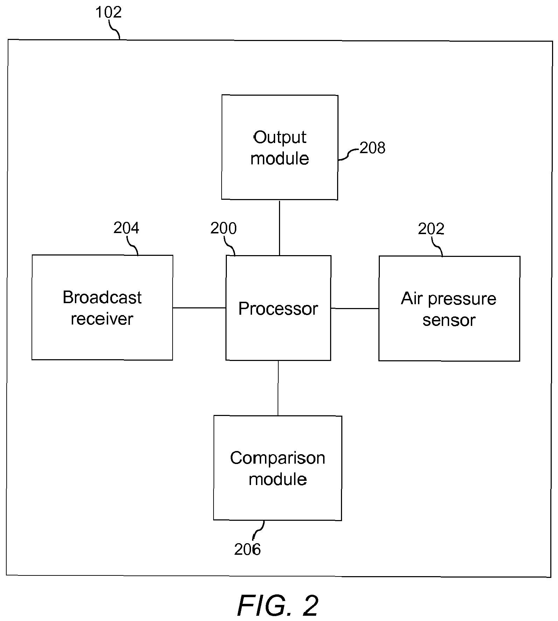

With reference to Figure 2, the television appliance 102 comprises a processor 200, an air pressure sensor 202, a television broadcast receiver 204, for example a satellite TV receiver, cable for receiver of terrestrial TV receiver, a comparison module 206 and an output module 208. The processor 200 is configured to coordinate between the air pressure sensor 202, the broadcast receiver 204, the comparison module 206 and the output module 208. The television appliance 102 may comprise a network communication module for connection to the internet.

The air pressure sensor 202 is arranged to generate a signal that is a measurement of local air pressure at the location 106. The processor 200 is arranged to receive signals from the air pressure sensor 202 and generate atmospheric pressure data derived from air pressure at the television appliance 102. The broadcast receiver 204 is arranged to receive signals from the broadcaster 108, including signals comprising the expected pressure signature 112. The comparison module 206 is arranged to determine the location 106 of the television appliance 102 by comparing the atmospheric pressure data and the expected pressure signature 112. The output module 208 is arranged to output media content to the television 104.

In some embodiments, the signal data 110 in the signal comprises a plurality of pressure signatures and the expected pressure signatures 112 is one of a plurality of pressure signatures. This is due to the nature of signals which mean that the expected pressure signature 112 intended for the television appliance 102 is not specifically transmitted to the television appliance 102. Thus, similarly, the signal data 110 may comprise pressure signatures intended for other devices. The expected pressure signature 112 intended for the television appliance 102 may be associated with an identifier of the television appliance 102 such that the television appliance 102 can extract the expected pressure signature 112 associated with its identifier from the signal data 110.

It will be understood that the present disclosure is applicable to media consumption devices in general, for example a television appliance as described above, an internet connected device, or any other media consumption device, or indeed any other device for which location is to be determined.

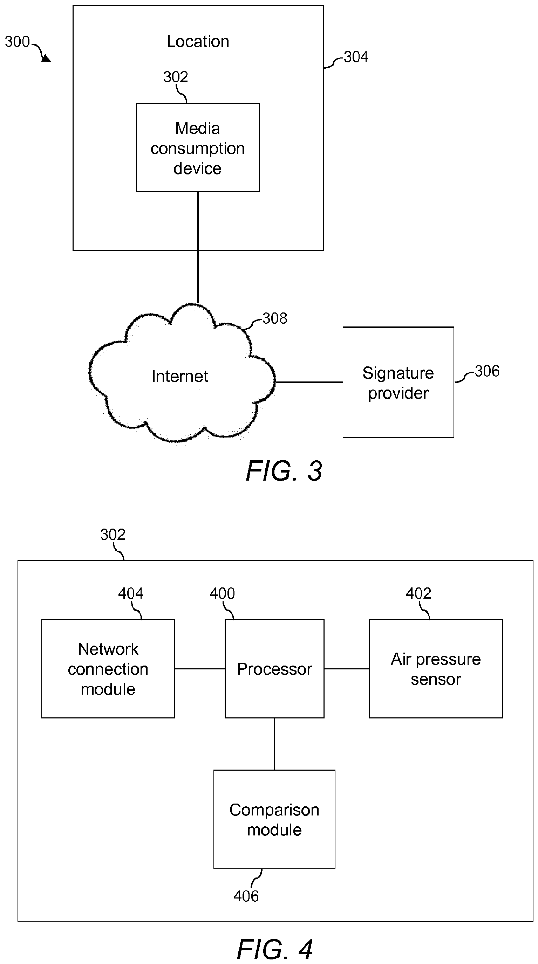

An embodiment comprising a connected media consumption device, for example a tablet computer or set-top box, is now described with reference to Figure 3. A media consumption device 302 that is capable of consuming media content received over the internet is located at a location 304. The media consumption device 302 is connected to a signature provider 306 via the internet 308. The signature provider 306 transmits signals to the media consumption device 302. The signals from the signature provider comprise an expected pressure signature associated with an expected location. The signature provider may also transmit, for example stream, media content to the media consumption device 302, and/or media content may be received by the media consumption device 302 from other source(s). The signature provider 306 may also integrate other functions, such as management of subscription to content offerings, etc. The media consumption device 302 is arranged to determine its location based on the expected pressure signature.

With reference to Figure 4, media consumption device 302 comprises a processor 400, an air pressure sensor 402, a network connection module 404 and a comparison module 406. The processor 400 is configured to coordinate between the air pressure sensor 402, the network connection module 404 and the comparison module 406. The media consumption device 302 comprises an output module (not shown) for connection to a display device such as a television or a display integrated with the media consumptive device. The media consumption device 302 may additionally comprise a broadcast receiver for receiving signals from a broadcaster.

The air pressure sensor 402 is arranged to generate a signal that is a measurement of local air pressure at the location 304. The processor 400 is arranged to receive signals from the air pressure sensor 402 and generate atmospheric pressure data derived from air pressure at the media consumption device 302. The network connection module 404 is arranged to connect to the internet 308 to at least receive signals from the signature provider 306. The comparison module 406 is arranged to determine the location 304 of the media consumption device 302 by comparing the atmospheric pressure data and the expected pressure signature.

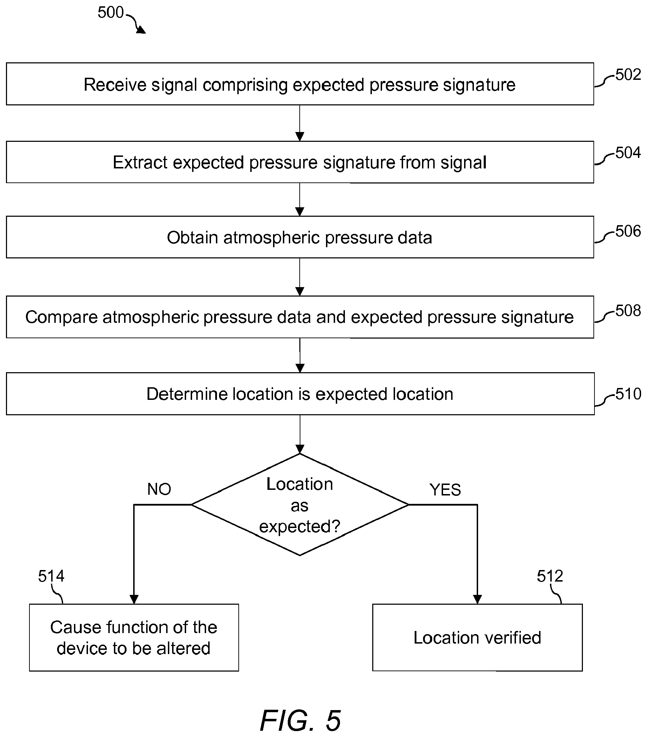

A method 500 of determining the location of a device such as the television appliance 102 or the media consumption device 402 is now described with reference to Figure 5. At step 502, a signal comprising an expected pressure signature is received, for example by the broadcast receiver 204 or the network connection module 404. At step 504, the processor 500 extracts the expected pressure signature from the signal for the comparison module 206, 406.

At step 506, the comparison module 206, 406 obtains atmospheric pressure data derived from air pressure at the device measured by the air pressure sensor 202, 402. At step 508, the comparison module 206, 406 compares the atmospheric pressure data and the expected pressure signature. At step 510, the comparison module 206, 406 determines that the location 106, 304 of the device is the expected location if the atmospheric pressure data is consistent with the expected pressure signature.

If the location is the expected location, at step 512, the comparison module 206, 406 verifies the location of the device, i.e. the television appliance 102 or the media consumption device 302. Alternatively, if the location is not the expected location, at step 514, the processor 200, 400 causes a function of the device to be altered. For example, the processor 200 of the television appliance 102 may disable the output module 208 from outputting some or all media content or may disable the television appliance 102 from being turned on. Another example is that the processor 400 of the media consumption device 302 may disable the playback of any media content or prevent the network connection module 404 from accessing media content from the internet 308.

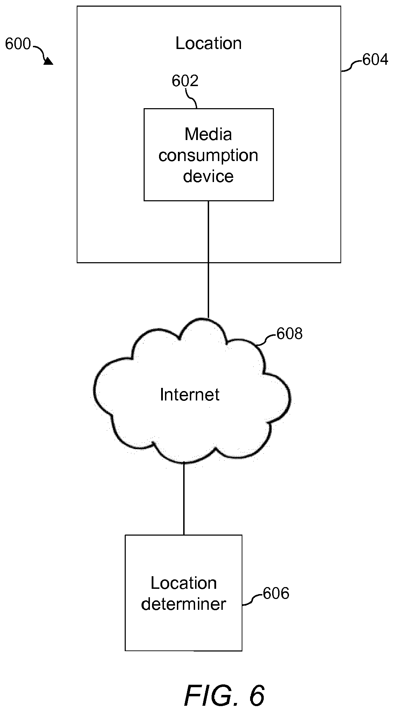

In some embodiments, now discussed with reference to Figures 6 to 9, location determination is performed at a remote system, for example an internet host or server or a television head end.

With reference to Figure 6, a media consumption device 602 that is capable of consuming media content is located at a location 604. The media consumption device 602 is connected to a location determiner 606 via the internet 608. For example, the media consumption device 602 may be a television, a set-top box, a computer, a games console, a tablet computer or any other media consumption device. The location determiner 606 may be dedicated to location determination or may have other functionality, such as transmitting content, via broadcast or the internet, managing subscription for content, etc. The media consumption device may receive content over any applicable transmission path, for example, broadcast i.e. cable, satellite, terrestrial, over the internet, etc. The location determiner 606 is remotely located from the media consumption device 602, i.e. the location determiner 606 is not located at the location 604. The location determiner 606 is arranged to determine the location of the media consumption device 602.

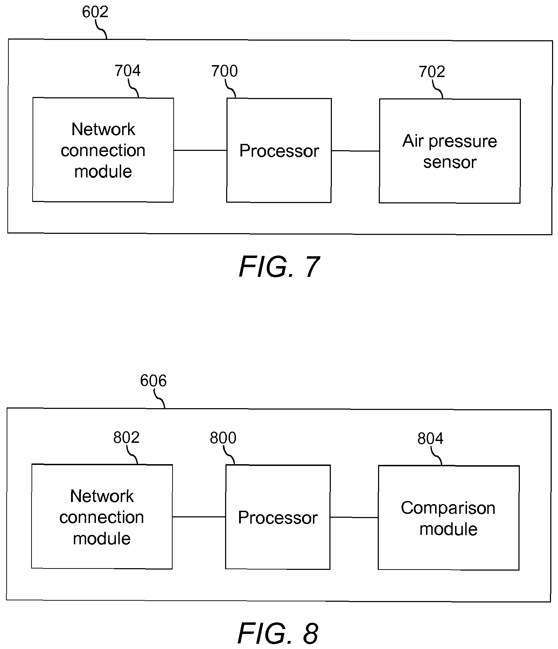

With reference to Figure 7, the media consumption device comprises a processor 700, an air pressure sensor 702 and a network connection module 704. The processor 700 is configured to coordinate between the air pressure sensor 702 and the network connection module 704. The media consumption device 602 may comprise a broadcast receiver for receiving broadcast signals from broadcasters via cable, satellite or over-the-air.

The air pressure sensor 702 is arranged to generate a signal that is a measurement of local air pressure at the location 604. The processor 700 is arranged to receive signals from the air pressure sensor 702 and generate atmospheric pressure data derived from air pressure at the media consumption device 602. The network connection module 704 is arranged to connect to the internet 608 to send and receive data from the location determiner 606.

With reference to Figure 8, the location determiner 606 comprises a processor 800, a network connection module 802 and a comparison module 804. The processor 800 is configured to coordinate between the network connection module 802 and the comparison module 804. The network connection module 802 is arranged to connect to the internet 608 to send and receive data from media consumption device 602. The comparison module 704 is arranged to determine the location 604 of the media consumption device 602.

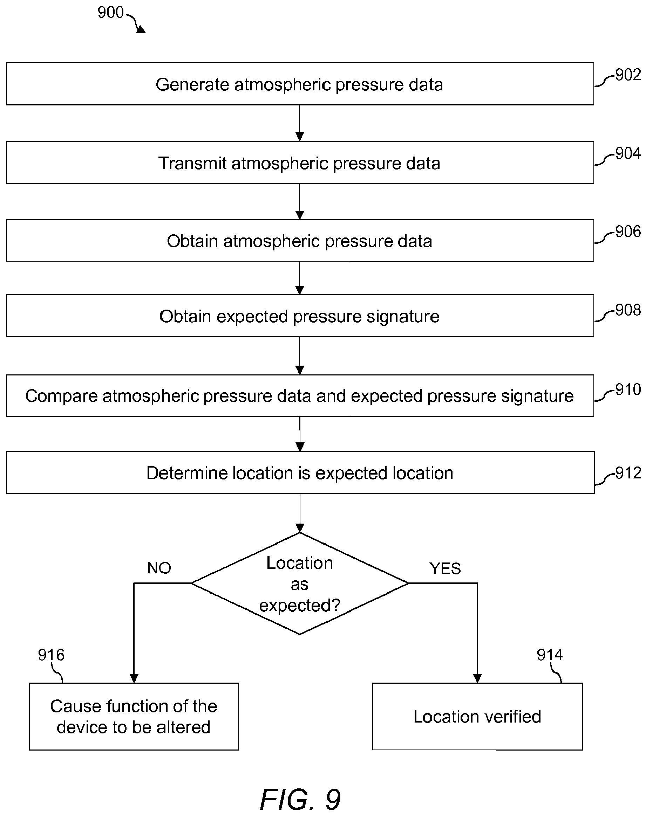

A method 900 of determining the location 604 of the media consumption device 602 is now described with reference to Figure 9. At step 902, the air pressure sensor 702 of the media consumption device 602 measures the local air pressure and the processor 700 generates atmospheric pressure data derived from the measured air pressure. At step 904, the network connection module 704 of the media consumption device 602 transmits the atmospheric pressure data to the location determiner 606 via the internet 608. In some embodiments, atmospheric pressure generated over a period of time is transmitted individually or in a batch to the location determiner 606.

At step 906, the comparison module 804 of the location determiner 606 obtains the atmospheric pressure data from the media consumption device 602 via the internet 608. At step 908, the comparison module 804 obtains an expected pressure signature associated with an expected location of the media consumption device 602 via the network connection module 802 or from a locally stored database. The source of the expected pressure signature is discussed below in greater detail. At step 910, the comparison module 804 compares the atmospheric pressure data and the expected pressure signature. Step 804 may comprise deriving pressure data for use in the comparison from the received atmospheric pressure data, and hence from the local air pressure of the device. For example, the received signal may be derived from local atmospheric pressure at the device to be indicative of the local atmospheric pressure and the atmospheric pressure data for comparison may be derived from the received data by further processing, for example calculating the difference between successive data points. At step 912, the comparison module 804 determines that the location 604 of the media consumption device 602 is the expected location if the atmospheric pressure data is consistent with the expected pressure signature.

If the location 604 is the expected location, at step 914, the comparison module 804 verifies the location of the media consumption device 602 and the location determiner 606 transmits a verification signal to the media consumption device 602. If the location 604 is not the expected location, at step 916, the location determiner 606 sends a signal to the media consumption device 602 to cause the processor 700 of the media consumption device 602 to cause a function of the media consumption device 602 to be altered. Alternatively or additionally, in some embodiments, the location determiner 606 takes a different action, for example in relation to services provided remotely to the media consumption device 602. For example, the location determiner 606 may activate a subscription in case of verifying location and not activate the subscription in case verification being unsuccessful. It will be understood that the action may be carried out at the location determiner 606 or by sending an appropriate message to another remote system, for example a head end or other media provider facility, for example a content and/or subscription management server. For example, the processor 700 of the media consumption device 602 may disable the playback of any media content or prevent the network connection module 704 from accessing media content from the internet 608.

In all embodiments, regardless of whether the location determination is performed at a device or at a remote system, the expected pressure signature may be obtained for an expected location from a third party such as a weather service, a weather station device at the expected location, or from crowdsourced weather data. Notably, weather stations generally measure air pressure outdoors. Whilst the device may be positioned indoors at a location, air pressure indoors is substantially the same as outdoors at the same location. Accordingly, the outdoors air pressure readings, e.g. from weather stations, can be compared against the generated atmospheric pressure data from the device to determine a location. The expected pressure signature may be in the same form at the atmospheric pressure data to enable a direct comparison. For example, if the atmospheric pressure data comprises five air pressure readings at hourly intervals, the expected pressure signature would also comprise air pressure readings at the same intervals.

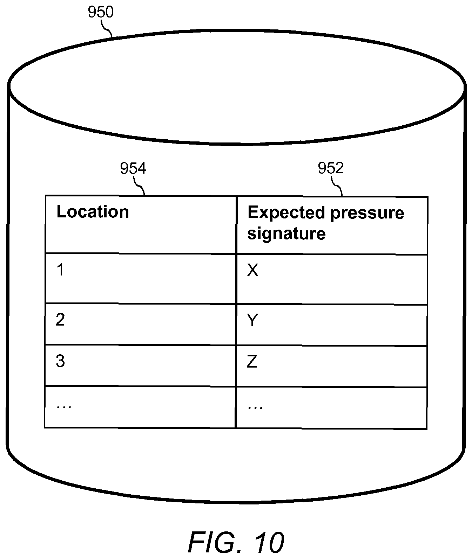

A number of embodiments have been described in which the location of a device is determined. The location may be determined in order to verify that a device is at an expected location. For example, the expected location may be a location indicated by a user input during a subscription procedure to access media content. If the location of the device is the expected location, then the device is permitted to access the media content. Conversely, if the location of the device is not the expected location, then the device is not permitted to access the media content. In order to determine location, an expected pressure signature may be determined by a database query. Figure 10 illustrates an example database 950 comprising expected pressure signatures for a plurality of locations. The database 950 may be queried for expected pressure signatures. Each location 952 is associated with a corresponding expected pressure signature 954 in the database 950. The database 950 may be located at the remote system, or be accessible by the remote system or the device. The expected pressure signatures 954 in the database 950 may be obtained for the corresponding expected locations from a third party such as a weather service, a weather station device at the expected location, or from crowdsourced weather data.

In some embodiments, the device or the remote system may determine where the device is located by determining which of a plurality of expected locations the device is located at. The plurality of expected locations may be some or all of the locations from the database 950, and the corresponding expected pressure signatures may be retrieved to form a plurality of expected pressure signatures. The comparison module 206, 406, 804 of the device or the remote system may receive the plurality of expected pressure signatures from the database 950, in which each expected pressure signature is associated with an expected location. In such embodiments, the comparison module 206, 406, 804 of the device or the remote system compares the atmospheric pressure data and each of the plurality of expected pressure signatures. The comparison module 206, 406, 804 identifies which of the expected locations the device is at by determining which one of the plurality of expected pressure signatures is consistent with the atmospheric pressure data.

In some embodiments, atmospheric pressure data and the expected pressure signature may each comprise a datum point, for example associated with the same time point. The comparison module may compare the datum point of the atmospheric pressure data with the datum point of the expected pressure signature. If the difference between the datum point of the atmospheric pressure data and the datum point of the expected pressure signature is within a predetermined threshold, then the comparison module is arranged to determine that the atmospheric pressure data is consistent with the expected pressure signature. As the expected pressure signature comprises one datum point, several locations may have the same expected pressure signature. Nonetheless, even if only one datum point of atmospheric pressure data is compared with one datum point of the expected pressure signature, the location of the device can be narrowed down. For example, it could be determined that the atmospheric pressure data is consistent with one or more expected pressure signatures. The location may be determined more accurately as the number of data points in the atmospheric pressure data and the expected pressure signature increases. For example, over a longer period of time, the expected pressure signatures from different locations will become more distinct from each other, even if at one point in time, the expected pressure signatures were the same.

In some embodiments, atmospheric pressure data and the expected pressure signature may each comprise a plurality of data points, and the plurality of data points in the atmospheric pressure data are compared with the plurality of data points in the expected pressure signature. The comparison module may individually compare each of the plurality of data points in the atmospheric pressure data and the expected pressure signature. If the difference between each of the plurality of data points in the atmospheric pressure data and the expected pressure signature is within a predetermined threshold, then the comparison module is arranged to determine that the atmospheric pressure data is consistent with the expected pressure signature. Additionally or alternatively, the comparison module may compare a total difference between the plurality of data points in the atmospheric pressure data and the plurality of data points in the expected pressure signature. If the total difference is within a predetermined threshold, then the comparison module is arranged to determine that the atmospheric pressure data is consistent with the expected pressure signature.

In some embodiments, atmospheric pressure data and the expected pressure signature may each comprise a plurality of data points, and a pattern formed by the atmospheric pressure data is compared with a pattern in the expected pressure signature.

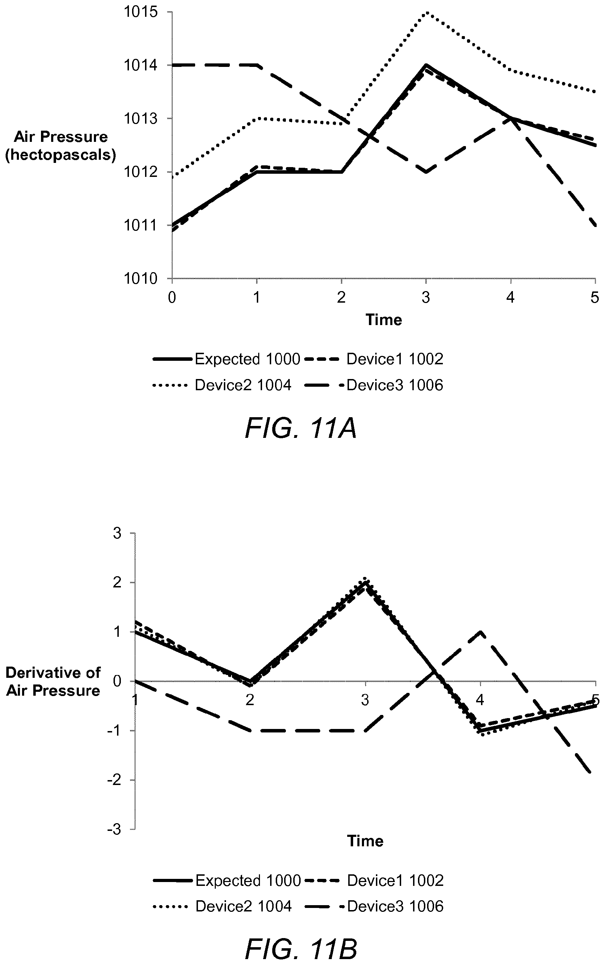

In some embodiments, atmospheric pressure data is a difference signal, for example a derivative of measurements of the air pressure at the device. Difference signals can be described in any suitable way by calculating the difference between successive, directly successive or otherwise, data points, whether normalised by the differencing interval, such as for a derivative, or not. A benefit of using a difference signal such as the derivative is that any calibration errors in the air pressure sensor at the device can be eliminated. Examples of atmospheric pressure data and expected pressure signatures are discussed with reference to Figures 11A and 11B.

Figure 11A illustrates an expected pressure signature for an expected location 1000 and atmospheric pressure data indicative of a measurement of the air pressure at the location of each of a first device location 1002, a second device location 1004 and a third device location 1006. The exemplary values of the expected pressure signature and the atmospheric pressure data illustrated in Figure 11A are tabulated in Table 1.

**Table 1 - exemplary values of air pressure variation over time in hectopascals**

| Time | Expected location 1000 | Device1 location 1002 | Device2 location 1004 | Device3 location 1006 |
|------|------------------------|-----------------------|-----------------------|-----------------------|
| 0 | 1011.0 | 1010.9 | 1011.9 | 1014.0 |
| 1 | 1012.0 | 1012.1 | 1013.0 | 1014.0 |
| 2 | 1012.0 | 1012.0 | 1012.9 | 1013.0 |
| 3 | 1014.0 | 1013.9 | 1015.0 | 1012.0 |
| 4 | 1013.0 | 1013.0 | 1013.9 | 1013.0 |

The first, second and third devices are each expected to be located within the expected location. Thus, the atmospheric pressure data of each of the first, second and third device locations 1002, 1004, 1006 are compared against the expected pressure signature for the expected location 1000, for example, at step 508 or 910 in which the comparison module compares the atmospheric pressure data and the expected pressure signature, either at the respective device or at a remote system.

In an example, the first device and the second device are both located at the expected location, and the third device is not located at the expected location. Using the atmospheric pressure data in Table 1:

- the comparison module evaluating the location for the first device determines that the atmospheric pressure data of the first device location 1002 is consistent with the expected pressure signature for the expected location 1000;
- the comparison module evaluating the location for the second device determines that the atmospheric pressure data of the second device location 1004 is not consistent with the expected pressure signature for the expected location 1000; and
- the comparison module evaluating the location for the third device determines that the atmospheric pressure data of the third device location 1006 is not consistent with the expected pressure signature for the expected location 1000.

Thus, the comparison module has correctly determined that the first device is located at the expected location, and that the third device is not located at the expected location. However, the determination that the second device is not located at the expected location is incorrect.

Figure 11B illustrates an expected pressure signature for the expected location 1000 and atmospheric pressure data comprising a derivative of the air pressure at the location of each of the first device location 1002, the second device location 1004 and the third device location 1006. The exemplary values of the expected pressure signature and the atmospheric pressure data illustrated in Figure 11B are tabulated in Table 2.

**Table 2 - exemplary values of from the derivative of air pressure over time**

| Time | Expected location 1000 | Device1 location 1002 | Device2 location 1004 | Device3 location 1006 |
|------|------------------------|-----------------------|-----------------------|-----------------------|
| 1 | 1.0 | 1.2 | 1.1 | 0.0 |
| 2 | 0.0 | -0.1 | -0.1 | -1.0 |

(continued)

| Time | Expected location 1000 | Device1 location 1002 | Device2 location 1004 | Device3 location 1006 |
|---|---|---|---|---|
| 3 | 2.0 | 1.9 | 2.1 | -1.0 |
| 4 | -1.0 | -0.9 | -1.1 | 1.0 |

In the example, the first device and the second device are both located at the expected location, and the third device is not located at the expected location. Using the atmospheric pressure data in Table 2:

- the comparison module evaluating the location for the first device determines that the atmospheric pressure data of the first device location 1002 is consistent with the expected pressure signature for the expected location 1000;
- the comparison module evaluating the location for the second device determines that the atmospheric pressure data of the second device location 1004 is consistent with the expected pressure signature for the expected location 1000; and
- the comparison module evaluating the location for the third device determines that the atmospheric pressure data of the third device location 1006 is not consistent with the expected pressure signature for the expected location 1000.

Thus, the comparison module has correctly determined that the first device and the second device are located at the expected location, and that the third device is not located at the expected location.

In particular, for the second device, using the atmospheric pressure data indicative of a measurement of the air pressure at the second device location 1004 resulted in the incorrect determination that the atmospheric pressure data is not consistent with the expected pressure signature. Whereas, using the atmospheric pressure data comprising a derivative of the air pressure at the second device location 1004 resulted in the correct determination that the atmospheric pressure data is consistent with the expected pressure signature. This is because the atmospheric pressure data indicative of the air pressure at the second device location 1004 in this example suffers from a calibration error whereas the derivative of the air pressure at the second device location 1004 removes the calibration error. Further, it will be understood that in many situations, a time series or time averaged signal, rather than a difference signal, may achieve satisfactory results, so that the disclosed embodiments are not limited to a difference signal.

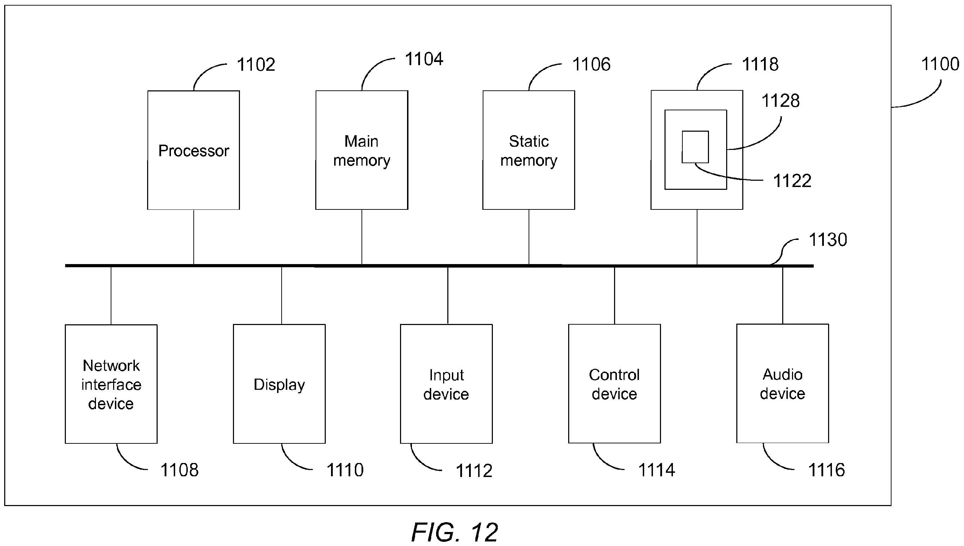

Figure 12 illustrates a block diagram of one implementation of a computing device 1100 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 1100 includes a processing device 1102, a main memory 1104 (e.g., read-only memory (ROM), flash memory, dynamic random access memory (DRAM) such as synchronous DRAM (SDRAM) or Rambus DRAM (RDRAM), etc.), a static memory 1106 (e.g., flash memory, static random access memory (SRAM), etc.), and a secondary memory (e.g., a data storage device 1118), which communicate with each other via a bus 1130.

Processing device 1102 represents one or more general-purpose processors such as a microprocessor, central processing unit, or the like. More particularly, the processing device 1102 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 1102 may also be one or more special-purpose processing devices such as an application specific integrated circuit (ASIC), a field programmable gate array (FPGA), a digital signal processor (DSP), network processor, or the like. Processing device 1102 is configured to execute the processing logic (instructions 1122) for performing the operations and steps discussed herein.

The computing device 1100 may further include a network interface device 1108. The computing device 1100 also may include a video display unit 1110 (e.g., a liquid crystal display (LCD) or a cathode ray tube (CRT)), an alphanumeric input device 1112 (e.g., a keyboard or touchscreen), a cursor control device 1114 (e.g., a mouse or touchscreen), and an audio device 1116 (e.g., a speaker).

The data storage device 1118 may include one or more machine-readable storage media (or more specifically one or more non-transitory computer-readable storage media) 1128 on which is stored one or more sets of instructions 1122 embodying any one or more of the methodologies or functions described herein. The instructions 1122 may also reside, completely or at least partially, within the main memory 1104 and/or within the processing device 1102 during execution thereof by the computer system 1100, the main memory 1104 and the processing device 1102 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein (for example, the air pressure sensor 202, the broadcast receiver 204, and the comparison module 206 of Figure 2 or the network connection module 602 and comparison module 604 of Figure 6) can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "obtaining", "generating", "determining", "comparing", "enabling", "disabling" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. A method for determining a location of a device, the method comprising:

   obtaining atmospheric pressure data generated at the device, wherein the atmospheric pressure data is derived from air pressure at the device;
   comparing the atmospheric pressure data and an expected pressure signature associated with an expected location; and
   determining that the location of the device is the expected location if the atmospheric pressure data is consistent with the expected pressure signature.

**2.** The method of claim 1, wherein the atmospheric pressure data is indicative of a change in air pressure over time.

**3.** The method according to any preceding claim, comprising causing a function of the device to be altered if the atmospheric pressure data is not consistent with the expected pressure signature.

**4.** The method according to any preceding claim, comprising:

comparing the atmospheric pressure data and each of a plurality of expected pressure signatures, wherein each expected pressure signature is associated with an expected location; and
identifying which of the expected locations the device is at by determining which one of the plurality of expected pressure signatures is consistent with the atmospheric pressure data.

**5.** The method according to any preceding claim, comprising:

receiving the expected pressure signature in a broadcast signal; and
extracting the expected pressure signature from the broadcast signal.

**6.** The method according to any one of claims 1 to 4, wherein obtaining the atmospheric pressure data comprises receiving data over a communication network.

**7.** The method according to any preceding claim, wherein the device is a media consumption device.

**8.** The method of claim 7, wherein the device is a television appliance comprising a television broadcast receiver for receiving broadcast media content.

**9.** A system comprising a processor configured to carry out the method according to any preceding claim.

**10.** A system comprising a processor configured to carry out the method according to claim 7 or 8, wherein the processor is located at the device.

**11.** A television appliance comprising:

a broadcast receiver arranged to receive broadcast media content; and
an air pressure sensor.

**12.** The television appliance of Claim 8, wherein the air pressure sensor is configured to generate atmospheric pressure data derived from air pressure at the television appliance, and the television appliance comprises a processor configured to:

compare the atmospheric pressure data and an expected pressure signature associated with an expected location; and
determine that the location of the television appliance is the expected location if the atmospheric pressure data is consistent with the expected pressure signature.

**13.** The television appliance of claim 9, wherein the processor is configured to carry out the method according to any of claims 2 to 5.

**14.** A computer program product comprising instructions which, when the program is executed by a computer, cause the computer to carry out the method of any of claims 1 to 8.

**15.** A non-transitory computer readable medium having computer-executable instructions that, when executed on a computer system, implement the method of any of claims 1 to 8.

100

Location

102                    104                    106

Television
appliance

110          112

Broadcaster

108

FIG. 1

FIG. 2

**FIG. 3**

**FIG. 4**

500

Receive signal comprising expected pressure signature ⌐502

Extract expected pressure signature from signal ⌐504

Obtain atmospheric pressure data ⌐506

Compare atmospheric pressure data and expected pressure signature ⌐508

Determine location is expected location ⌐510

NO ◁ Location as expected? ▷ YES

514
Cause function of the device to be altered

512
Location verified

*FIG. 5*

*FIG. 6*

FIG. 7

FIG. 8

900

Generate atmospheric pressure data — 902

Transmit atmospheric pressure data — 904

Obtain atmospheric pressure data — 906

Obtain expected pressure signature — 908

Compare atmospheric pressure data and expected pressure signature — 910

Determine location is expected location — 912

Location as expected?

NO

YES

916
Cause function of the device to be altered

914
Location verified

*FIG. 9*

950

| Location | Expected pressure signature |
|----------|----------------------------|
| 1 | X |
| 2 | Y |
| 3 | Z |
| … | … |

954  952

FIG. 10

**Air Pressure (hectopascals)**

Expected 1000 --- Device1 1002
....... Device2 1004 --- -Device3 1006

*FIG. 11A*

**Derivative of Air Pressure**

Expected 1000 --- Device1 1002
....... Device2 1004 --- -Device3 1006

*FIG. 11B*

*FIG. 12*

Europäisches
Patentamt

European
Patent Office

Office européen
des brevets

# EUROPEAN SEARCH REPORT

Application Number

EP 17 30 5501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/065184 A2 (NEXTNAV LLC [US]; WOLF TOM [US]; RAGHUPATHY ARUN [US]; SENDONARIS ANDR) 18 May 2012 (2012-05-18)<br>* page 1 - page 1 *<br>* page 45, line 1 - page 48, line 28; claims; figures * | 1-8, 10-15 | INV.<br>G01C21/00<br>G01C21/20<br>H04W4/04 |
| X | US 2009/286556 A1 (YUMOTO TAKU [JP] ET AL) 19 November 2009 (2009-11-19)<br>* paragraphs [0001], [0017], [0021] - [0023]; claims; figures * | 1-15 | |
| X | US 2014/200037 A1 (VENKATRAMAN SAI PRADEEP [US] ET AL) 17 July 2014 (2014-07-17)<br>* paragraphs [0001], [0003], [0005], [0034]; claims; figures * | 1-15 | |

-----

-----

-----

TECHNICAL FIELDS
SEARCHED (IPC)

G01C
H04W

The present search report has been drawn up for all claims

| Place of search | Date of completion of the search | Examiner |
|---|---|---|
| Munich | 13 October 2017 | D'Attilia, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

# EP 3 399 277 A1

## ANNEX TO THE EUROPEAN SEARCH REPORT
## ON EUROPEAN PATENT APPLICATION NO.

EP 17 30 5501

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2017

| Patent document cited in search report | | Publication date | Patent family member(s) | | Publication date |
|---|---|---|---|---|---|
| WO 2012065184 | A2 | 18-05-2012 | AU | 2011325913 A1 | 23-05-2013 |
| | | | AU | 2015258307 A1 | 28-01-2016 |
| | | | CA | 2817115 A1 | 18-05-2012 |
| | | | CN | 103238041 A | 07-08-2013 |
| | | | EP | 2638405 A2 | 18-09-2013 |
| | | | JP | 2014503796 A | 13-02-2014 |
| | | | KR | 20130113481 A | 15-10-2013 |
| | | | WO | 2012065184 A2 | 18-05-2012 |
| US 2009286556 | A1 | 19-11-2009 | NONE | | |
| US 2014200037 | A1 | 17-07-2014 | CN | 104937373 A | 23-09-2015 |
| | | | EP | 2943746 A1 | 18-11-2015 |
| | | | JP | 2016503177 A | 01-02-2016 |
| | | | KR | 20150104609 A | 15-09-2015 |
| | | | US | 2014200037 A1 | 17-07-2014 |
| | | | US | 2016337813 A1 | 17-11-2016 |
| | | | WO | 2014109865 A1 | 17-07-2014 |

EPO FORM P0459

For more details about this annex : see Official Journal of the European Patent Office, No. 12/82